# EUROPEAN PATENT APPLICATION

(11) **EP 3 321 590 A1**
(43) Date of publication of application: **16.05.2018**
(21) Application number: 17199827.1
(22) Date of filing: 03.11.2017
(51) Int. Cl.: F23R 3/28, F23R 3/34, F02C 7/228, F02C 7/232

(54) **AUTO-THERMAL FUEL NOZZLE FLOW MODULATION**

(30) Priority: 15.11.2016 US 201615351888
(71) Applicant: General Electric Company, Schenectady, NY 12345 (US)
(72) Inventor: WIDENER, Stanley Kevin, Greenville, SC South Carolina 29615 (US); MIRANDA, Carlos Miguel, Greenville, SC South Carolina 29615 (US)
(74) Representative: Lee, Brenda

(57) **Abstract**

A combustor 10 for a gas turbine 20, including: a fuel nozzle 54; and a passively-actuated valve 68 for selectively directing a supply of fuel 60 to at least one fuel passage 64, 66 in the fuel nozzle based on a characteristic of the fuel.

## Description

### BACKGROUND OF THE INVENTION

The disclosure relates generally to gas turbines, and more specifically, to the control of gas turbine operation at base load under cold fuel conditions using auto-thermal fuel nozzle flow modulation.

Gas turbines typically include a compressor, a combustor section including one or more combustors, and at least one turbine section. Compressor discharge air is channeled into each combustor where fuel is injected, mixed, and burned. The combustion gases are then channeled to the turbine section which extracts energy from the combustion gases.

Gas turbine engine combustion systems typically operate over a wide range of flow, pressure, temperature, and fuel/air ratio operating conditions. Controlling combustor performance is required to achieve and maintain satisfactory overall gas turbine system operation and to achieve acceptable emissions levels (e.g., NOₓ and CO levels).

One class of gas turbine combustors achieve low NOₓ emissions levels by employing combustion using premixed fuel, where fuel and air are mixed prior to combustion to control and limit thermal NOₓ production. This class of combustors requires management of combustion conditions to achieve stable operation and acceptable NOₓ and CO emissions, while limiting combustion dynamics (e.g., pressure oscillations) usually related to the combination of acoustics and unsteady energy release of the combustion process. Such systems often require multiple independently controlled fuel injection points and/or fuel nozzles in each of one or more combustors to allow gas turbine operation from start-up through full load. Such combustion systems generally function well over a relatively narrow range of fuel injector pressure ratios, which is a function of, for example, fuel flow rate, fuel passage flow area, and gas turbine cycle pressures before and after the fuel nozzles. Such pressure ratio limits may be managed by selection of the correct fuel nozzle passage areas and regulation of the fuel flows to fuel nozzles.

Standards for setting fuel gas composition are often defined using the Wobbe Index or a modified Wobbe Index (MWI). The modified Wobbe Index allows comparison of the energy content of different fuel gases at different temperatures. The Wobbe Index is defined most generally as the relative fuel heating value divided by the relative density. The modified Wobbe Index (MWI) is even more instructive because it takes into account the temperature of the fuel. The Modified Wobbe Index is the ratio of the lower heating value to the square root of the product of the specific gravity and the absolute gas temperature.

Variations in the modified Wobbe Index from the specified value for the fuel supplied can lead to unacceptable levels of combustion dynamics. That is, it has been determined that combustion dynamics may be a function of the modified Wobbe Index. Consequently, operation at high levels of variations in the modified Wobbe Index from a specified value can result in hardware distress, reduced component life of the combustion system and a potential for power generation outage.

The performance of a gas turbine in avoiding combustion dynamics is sensitive to the combination of fuel(s) and fuel nozzle(s) used for combustion. When a gas turbine combustor is tuned to avoid combustion dynamics with a specific nozzle geometry and a gas fuel with a modified Wobbe value requiring high gas fuel temperatures for emissions compliant operation at base load, operation with cold fuel can lead to combustion dynamics and non-compliant emissions. Such issues prevent the gas turbine from being fully loaded with cold fuel. One reason for this is that the fuel pressure ratio across fuel delivery orifices in a fuel nozzle may be too low when using cold fuel (e.g., due to a high fuel Modified Wobbe Index).

Currently, certain gas turbines that are designed to run on hot gas fuel are prevented from operating at an emissions compliant combustion mode when the fuel gas temperature is below a specified range and/or the modified Wobbe Index is out of range. This limitation prevents high combustion dynamics, which can lead to hardware damage and/or unit flame out. Typically, power plants heat their fuel using a balance of plant processes, which take a significant amount of time to reach operating temperature. The current forced lockout of emissions compliant mode when fuel temperature is below the specified range means the operator cannot reach higher loads and must hold at a low load level, waiting for fuel temperature to increase. Such delays cost the operator time, extending operation under non-emission compliant modes, and loss of power generation revenues.

### BRIEF DESCRIPTION OF THE INVENTION

A first aspect of the disclosure provides a combustor for a gas turbine, including: a fuel nozzle; and a passively-actuated valve for selectively directing a supply of fuel to at least one fuel passage in the fuel nozzle based on a characteristic of the fuel.

A second aspect of the disclosure provides a turbine system, including: a compressor; a combustor; and a turbine, the combustor comprising: a fuel nozzle; and a passively-actuated valve for selectively directing a supply of fuel to at least one fuel passage in the fuel nozzle based on a characteristic of the fuel.

A third aspect of the disclosure provides a method, including: controlling a temperature of fuel in a combustor of a gas turbine; and selectively actuating a thermally-actuated valve in the combustor based on the temperature of the fuel to control a fuel pressure ratio across fuel delivery holes in a fuel nozzle of the combustor.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depicts various embodiments of the disclosure. In the drawings, like numerals refer to like elements.
FIG. 1 is a schematic diagram of a combined cycle gas power generation system according to embodiments.
FIG. 2 is a cross-sectional illustration of a combustor section of a gas turbine system according to embodiments.
FIG. 3 is partial enlarged cross-sectional view of the head end area of the combustor of FIG. 2 with an auto-thermal valve in a closed state according to embodiments.
FIG. 4 is partial enlarged cross-sectional view of the head end area of the combustor of FIG. 2 with the auto-thermal valve in an open state according to embodiments.
FIGS. 5 and 6 depict a swirler assembly according to embodiments.
FIG. 7 is partial enlarged cross-sectional view of the head end area of the combustor of FIG. 2 with an auto-thermal valve in a closed state according to embodiments.
FIG. 8 is partial enlarged cross-sectional view of the head end area of the combustor of FIG. 2 with the auto-thermal valve in an open state according to embodiments.
FIG. 9 is partial enlarged cross-sectional view of a head end area of a combustor with an auto-thermal valve in a closed state according to embodiments.
FIG. 10 is partial enlarged cross-sectional view of a head end area of a combustor with the auto-thermal valve of FIG. 9 in an open state according to embodiments.
FIG. 11 depicts an auto-thermal valve in a closed configuration according to embodiments.
FIG. 12 depicts the auto-thermal valve of FIG. 11 in an open configuration according to embodiments.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

The disclosure relates generally to gas turbines, and more specifically, to the control of gas turbine operation at base load under cold fuel conditions using auto-thermal fuel nozzle flow modulation.

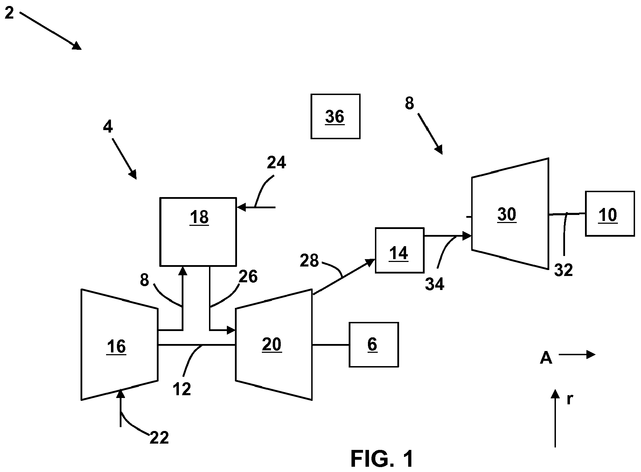

In the Figures, for example as shown in FIG. 1, the "A" axis represents an axial orientation. As used herein, the terms "axial" and/or "axially" refer to the relative position/direction of objects along axis A, which is substantially parallel with the axis of rotation of the turbomachine (in particular, the rotor section). As further used herein, the terms "radial" and/or "radially" refer to the relative position/direction of objects along an axis (r), which is substantially perpendicular with axis A and intersects axis A at only one location. Additionally, the terms "circumferential" and/or "circumferentially" refer to the relative position/direction of objects along a circumference (c) which surrounds axis A but does not intersect the axis A at any location. In the description, a set of elements includes one or more elements.

Turning to FIG. 1, a schematic view of portions of an illustrative combined cycle power generating system 2 is shown. The combined cycle power generating system 2 includes a gas turbine system 4 operably connected to a generator 6, and a steam turbine system 8 operably coupled to another generator 10. The generator 6 and the gas turbine system 4 may be mechanically coupled by a shaft 12. Also shown in FIG. 1, a heat exchanger 14 is operably connected to the gas turbine system 4 and the steam turbine system 8. The heat exchanger 14 may be fluidly connected to both the gas turbine system 4 and the steam turbine system 8 via conventional conduits (numbering omitted).

The gas turbine system 4 includes a compressor system 16 and a combustor system 18. The gas turbine system 4 also includes a gas turbine 20 coupled to the shaft 12. In operation, air 22 enters an inlet of the compressor system 16, is compressed, and then discharged to the combustor system 18 where a supply of fuel 24 is burned to provide high energy combustion gases 26, which drive the gas turbine 20. Typically, the combustor system 18 includes a plurality of fuel nozzles for injecting fuel into a combustion area of the combustor section 18. In the gas turbine 20, the energy of the hot gases is converted into work, some of which is used to drive the compressor system 16 through the rotating shaft 12, with the remainder available for useful work to drive a load such as the generator 6 via the shaft 12 for producing electricity.

FIG. 1 also represents the combined cycle in its simplest form in which the energy in the exhaust gases 28 exiting the gas turbine 20 are converted into additional useful work. The exhaust gases 28 enter the heat exchanger 14 in which water is converted to steam 34. The steam turbine system 8 may include one or more steam turbines 30 (only one is shown), e.g., a high pressure (HP) turbine, an intermediate pressure (IP) turbine, and a low pressure (LP) turbine, each of which are coupled to a shaft 32. The steam turbine 30 includes a plurality of rotating blades (not shown) mechanically coupled to the shaft 32. In operation, steam 34 from the heat exchanger 14 enters an inlet of the steam turbine 30 and is channeled to impart a force on the blades of the steam turbine 30 causing the shaft 32 to rotate. The rotating shaft 32 may be coupled to the generator 10 to produce additional electric power. The fuel 24 may be heated (e.g., to increase the efficiency of the gas turbine system 4) using, for example, hot water and/or steam generated in the heat exchanger 14, using a fuel heater, and/or in any other suitable manner. A fuel control system 36 operably coupled to the gas turbine system 4 and the steam turbine system 8 monitors and regulates the temperature of the fuel 24.

When such a combined-cycle power generating system 2 is designed for heated fuel 24, the combustion system 18 may not be fully operable when the fuel 24 is cold. Thus, during startup, when there is not enough heat available to heat the fuel 24, there is a limit to the load that can be attained before the steam turbine system 8 is sufficiently warmed up. This hold prevents the operator from starting the gas turbine system 4 and loading to full load as quickly as when the combined-cycle power generating system 2 is warm.

According to embodiments, at least one passive, auto-thermal valve sensitive to fuel temperature is provided for selectively directing fuel to a set of fuel delivery orifices in at least one fuel nozzle of a combustor of a gas turbine system. The auto-thermal valve is configured to be closed at fuel temperatures below a temperature set point and open at fuel temperatures above the temperature set point. When the auto-thermal valve is closed, fuel is prevented from flowing to the set of fuel delivery orifices in the fuel nozzle. When the auto-thermal valve is open, fuel is allowed to flow to the set of fuel delivery orifices in the fuel nozzle.

Combustion dynamics problems prevent fully loading a gas turbine system with cold fuel because the fuel pressure ratio across fuel delivery orifices in a fuel nozzle may be too low when using cold fuel (e.g., due to a high fuel Modified Wobbe Index). According to embodiments, however, when using an auto-thermal valve, the fuel pressure ratio across fuel delivery orifices in a fuel nozzle when using cold fuel will be higher due to a lower total fuel delivery orifice effective flow area, keeping combustion dynamics under control. The pressure ratio across fuel delivery orifices in a fuel nozzle when fuel is at a temperature above the temperature set point of the auto-thermal valve is unaffected because the auto-thermal valve is open and all fuel delivery orifices are fueled. Use of such an auto-thermal valve enables base load operation with cold or warm fuel, and eliminates control holds on increasing load due to MWI values that fall outside of limits. The plant operator can go directly to base load with cold fuel, with no holding points for fuel heating.

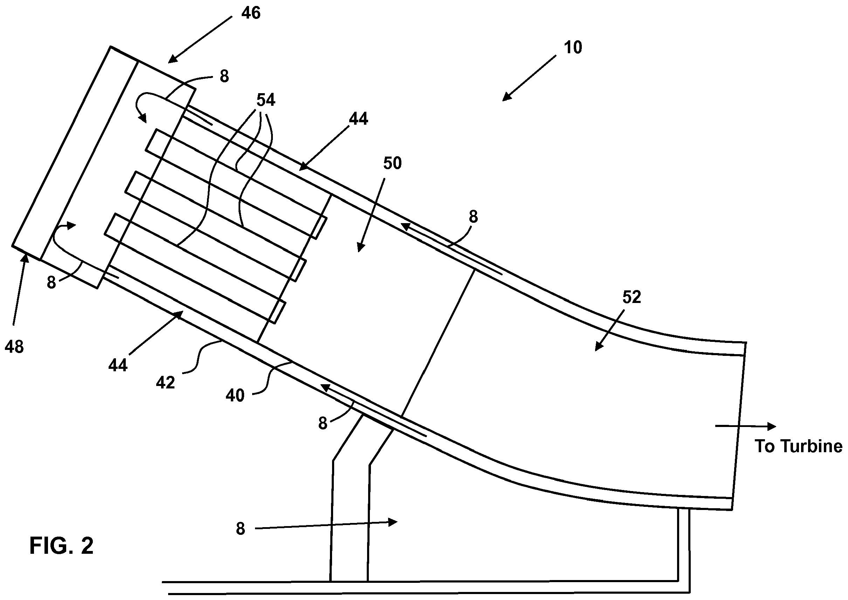

FIG. 2 depicts a simplified cross-sectional illustration of a combustor section 10 (hereafter "combustor 10") of a gas turbine system 2 according to embodiments.

The combustor 10 of the gas turbine system 2 includes a combustor chamber 40 enclosed within a compressor discharge casing 42. Generally described, the volume 44 located between the combustor chamber 40 and the compressor discharge casing 42 receives a flow of compressed air 8 discharged from the compressor section 4. The flow of compressed air 8 passes through the volume 44 toward a head end 46 of the combustor 10, which is closed by an end cover assembly 48.

The combustor chamber 40 further includes a reaction zone 50 in which a mixture of fuel and air is ignited and burned to form a flow of hot gas. A transition duct 52 at the aft end of the combustor chamber 40 directs the flow of hot gas from the reaction zone 50 to the turbine section 16 where the hot gas may be used, for example, to drive a rotor shaft (e.g., shaft 12, FIG. 1) to produce power. The end cover assembly 48 may include various supply passages, manifolds, and associated valving (not shown in FIG. 2) for supplying fuel to a plurality of fuel nozzles 54, which are configured to inject fuel and/or premixed air/fuel into the reaction zone 50 for combustion. Other fluids (e.g., air, water, oil, and/or the like) may also be supplied to the fuel nozzles 54 and/or other components of the combustion section 10 through the end cover assembly 48.

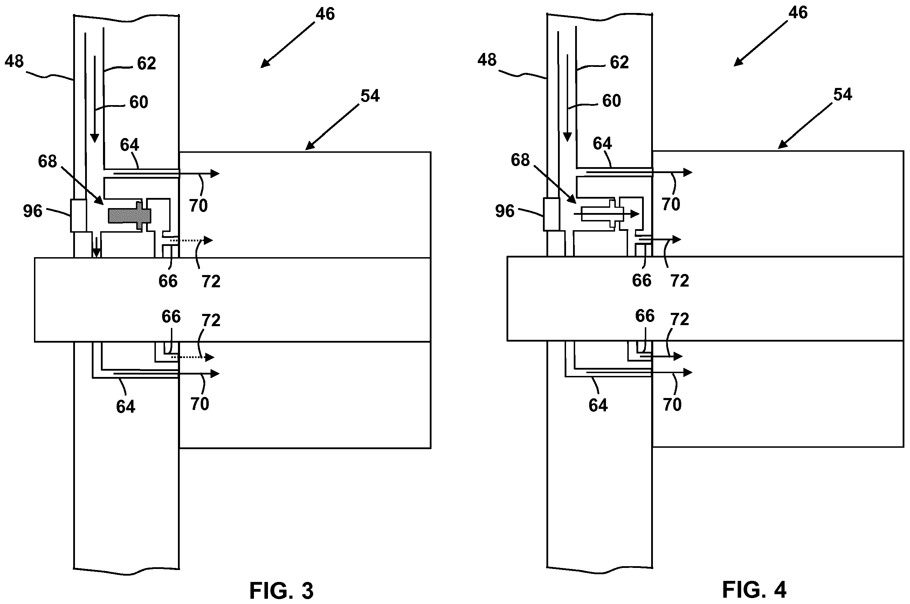

A partial enlarged cross-sectional view of the head end 46 of the combustor 10 of FIG. 2 is depicted in FIGS. 3 and 4. As shown, a supply of fuel 60 is provided to the fuel nozzle 54 through at least one fuel passage 62 formed in/through the end cover assembly 48. The fuel 60 passes from the fuel passage 62 into the fuel nozzle 54 through a first set of fuel passages 64. In the configuration shown in FIGS. 3 and 4, two fuel passages 64 are shown, however any number of fuel passages 64 may be utilized. As will be presented in greater detail below, the fuel 60 may also selectively pass through a second set of fuel passages 66 into the fuel nozzle 54 depending on the state of a passive, auto-thermal valve 68. According to embodiments, the auto-thermal valve 68 is configured to open and close based on the temperature of the fuel 60. Two fuel passages 66 are depicted in FIGS. 3 and 4, however any number of fuel passages 66 may be utilized. Further, a plurality of auto-thermal valves 68 may be used.

When the temperature of the fuel 60 is below the temperature set point of the auto-thermal valve 68, as shown in FIG. 3, the auto-thermal valve 68 is in a closed state in which the fuel 60 is prevented from flowing into the fuel nozzle 54 through the fuel passages 66. Fuel 60 does, however, flow into the fuel nozzle 54 through the fuel passages 64. In this case, the fuel 60 is divided into separate supplies of fuel 70 for use in the fuel nozzle 54.

The auto-thermal valve 68 includes a temperature set point, such that the auto-thermal valve 68 is closed at fuel temperatures below the temperature set point and open at fuel temperatures above the temperature set point. To this extent, the operation of the auto-thermal valve 68 is controlled by the temperature of the fuel 60.

When the temperature of the fuel 60 is above the temperature set point of the auto-thermal valve 68, as shown in FIG. 4, the auto-thermal valve 68 is in an open state in which fuel 72 (i.e., a portion of the fuel 60) is allowed to flow into the fuel nozzle 54 through each of the fuel passages 66; fuel 70 continues to flow into the fuel nozzle 54 through each of the fuel passages 64. To this extent, the fuel 60 is divided into separate supplies of fuel 70, 72 for use in the fuel nozzle 54. Fuel 72 continues to flow into the fuel nozzle 54 via the fuel passages 66 as long as the temperature of the fuel 60 is above the set point of the auto-thermal valve 68.

A door 96 in the end cover assembly 48 provides access to the auto-thermal valve 68 (e.g., for installation, repair, and/or replacement of the auto-thermal valve 68). Although only one auto-thermal valve 68 is depicted, a plurality of auto-thermal valves 68 may be utilized. Each of the plurality of auto-thermal valve 68 may have the same or different temperature set points.

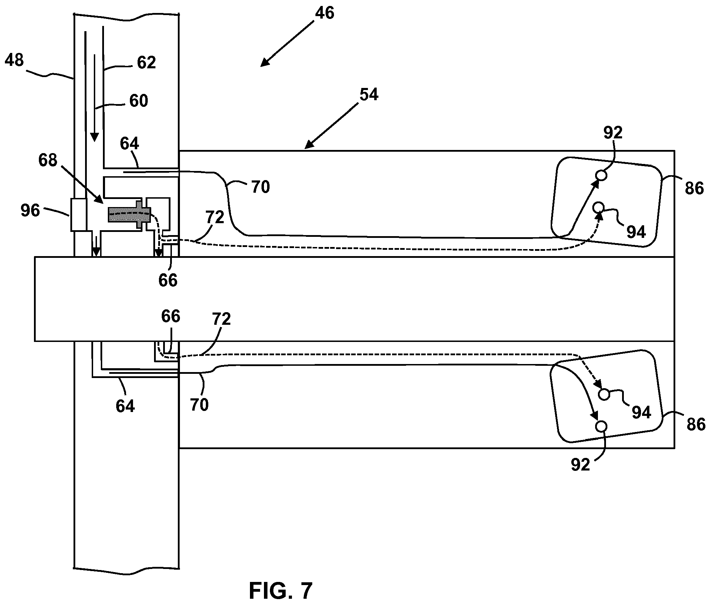

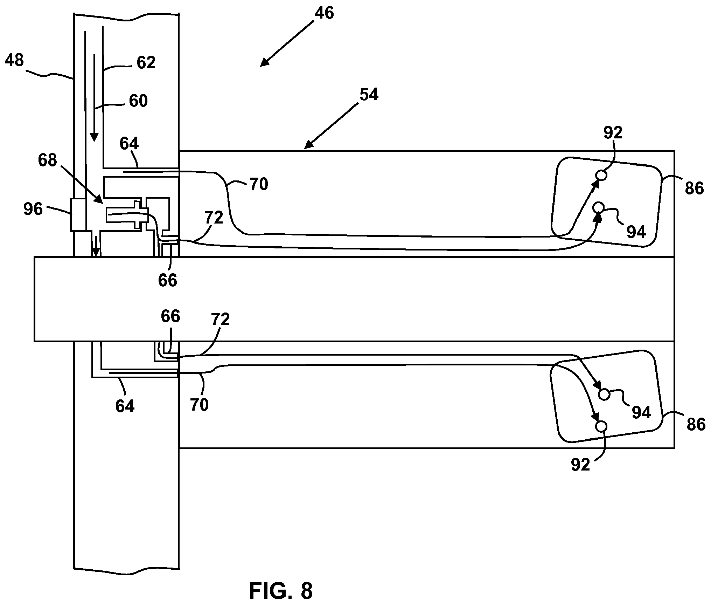

The fuel control system 36 (FIG. 1) monitors and regulates the temperature of the fuel 60 provided to the fuel nozzle 54 during the operation of the gas turbine system 4. Thus, the fuel control system 36 can 'turn on' the auto-thermal valve 68 by increasing the temperature of the fuel 60 above the temperature set point of the auto-thermal valve 68, and can 'turn off the auto-thermal valve 68 by reducing the temperature of the fuel 60 below the temperature set point of the auto-thermal valve 68. For example, the fuel control system 36 may selectively control the auto-thermal valve 68 when providing certain premixed fuels (e.g., PM2, PM3) to the fuel nozzle 54 at different loading and/or unloading operational stages of the gas turbine system 4. An example of the use of the auto-thermal valve 68 for selectively providing fuel to fuel delivery holes in the vanes of a swirler assembly 80 in the fuel nozzle 54 is depicted in FIGS. 7 and 8.

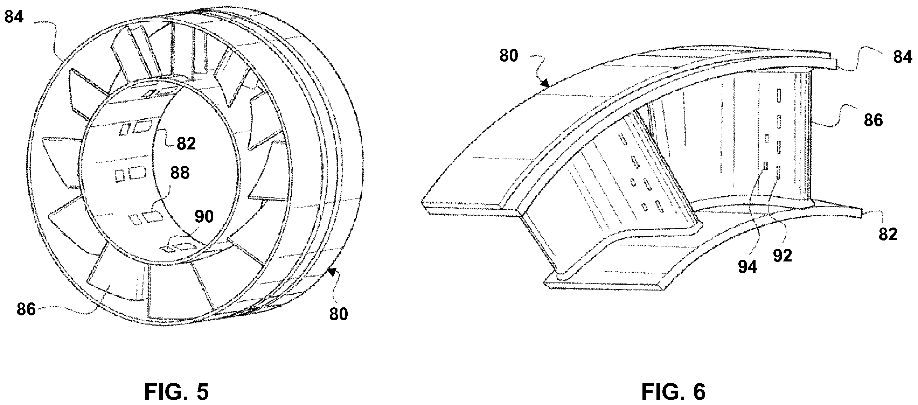

As known in the art, a swirler assembly with fuel injection, often referred to as a swirler assembly, may often be included in at least some of the fuel nozzles 54 used in a gas turbine system 4 for premixing fuel with air upstream of the reaction zone 50. An embodiment of a swirler assembly 80 is depicted in FIGS. 5 and 6.

The swirler assembly 80 includes a hub 82 and a shroud 84 connected by a series of airfoil shaped turning vanes 86, which impart swirl to the combustion air passing through a premixer of the fuel nozzle 54. Each turning vane 86 contains a primary fuel supply passage 88 and a secondary fuel supply passage 90 through the core of the vane 86, with the primary fuel supply passages 88 offset (e.g., axially) from the secondary fuel supply passages 90. The primary and secondary full supply passages 88, 90 distribute fuel to primary fuel delivery holes 92 and secondary fuel delivery holes 94, respectively, which penetrate the wall of each vane 86. The primary and secondary fuel delivery holes 92, 94 may be located on the pressure side, the suction side, or both sides of the vanes 86. The fuel begins mixing with combustion air in the swirler assembly 80, and fuel/air mixing is completed in an annular passage (not shown). After exiting the annular passage, the fuel/air mixture enters the reaction zone 50 of the combustor 10 where combustion takes place.

In FIGS. 7 and 8, an auto-thermal valve 68 is used to selectively provide fuel 70 to the primary and secondary fuel delivery holes 92, 94 in the vanes 86 of a swirler assembly 80. For example, in FIG. 7, the auto-thermal valve 68 is in a closed state (i.e., the temperature of the fuel 60 is below the temperature set point of the auto-thermal valve 68), with the supply of fuel 70 entering the fuel nozzle 54 through the fuel passages 64. At least a portion of the fuel 70 is directed through the body of the fuel nozzle 54 to the primary fuel delivery holes 92 in the vanes 86 of the swirler assembly 80. The supply of fuel 72, however, does not flow through the fuel passages 66 to the swirler assembly 80 because the auto-thermal valve 68 is in a closed state.

In FIG. 8, the auto-thermal valve 68 is in an open state (i.e., the temperature of the fuel 60 is above the temperature set point of the auto-thermal valve 68). With the auto-thermal valve 68 in an open state, fuel 70 enters the fuel nozzle 54 through the fuel passages 64 and fuel 72 enters the fuel nozzle 54 through the fuel passages 66. The fuel 72 is directed through the body of the fuel nozzle 54 to the secondary fuel delivery holes 94 in the vanes 86 of the swirler assembly 80. Further, fuel 70 continues to be directed through the body of the fuel nozzle 54 to the primary fuel delivery holes 92 in the vanes 86 of the swirler assembly 80.

The temperature-based regulation of the supply of fuel 72 by the auto-thermal valve 68 allows passive control over the fuel-air concentration distribution profile across the vanes 86 of the swirler assembly 80. In addition, it provides passive control over the fuel pressure ratio across the primary and secondary fuel delivery holes 92, 94 in the vanes 86 of the swirler assembly 80. In other words, when using an auto-thermal valve 68, the fuel pressure ratio across the primary and secondary fuel delivery holes 92, 94 in the vanes 86 of the swirler assembly 80 when using cold fuel (e.g., a fuel temperature under the temperature set point of the auto-thermal valve 68) will be higher due to a lower fuel nozzle effective flow area (since fuel 72 is not provided to the secondary fuel delivery holes 94), keeping combustion dynamics under control. The pressure ratio across the primary and secondary fuel delivery holes 92, 94 in the vanes 86 of the swirler assembly 80 when the fuel 60 is at a temperature above the temperature set point of the auto-thermal valve 68 is not changed from the original design value because the auto-thermal valve 68 is open and all fuel delivery holes 92, 94 are fueled. Use of such an auto-thermal valve 68 enables base load operation with cold or warm fuel, and eliminates control holds on increasing load due to MWI values that fall outside of limits. Thus, a plant operator can go directly to base load with cold fuel, with no holding points for fuel heating.

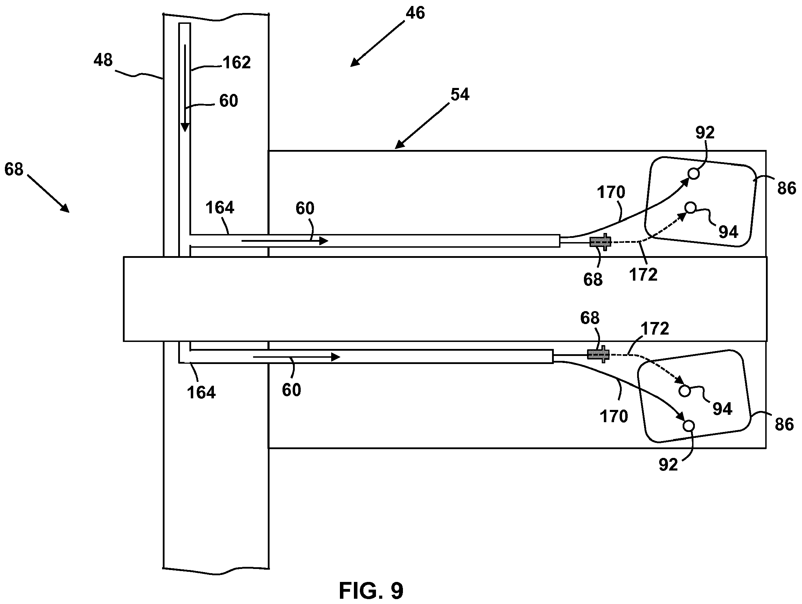

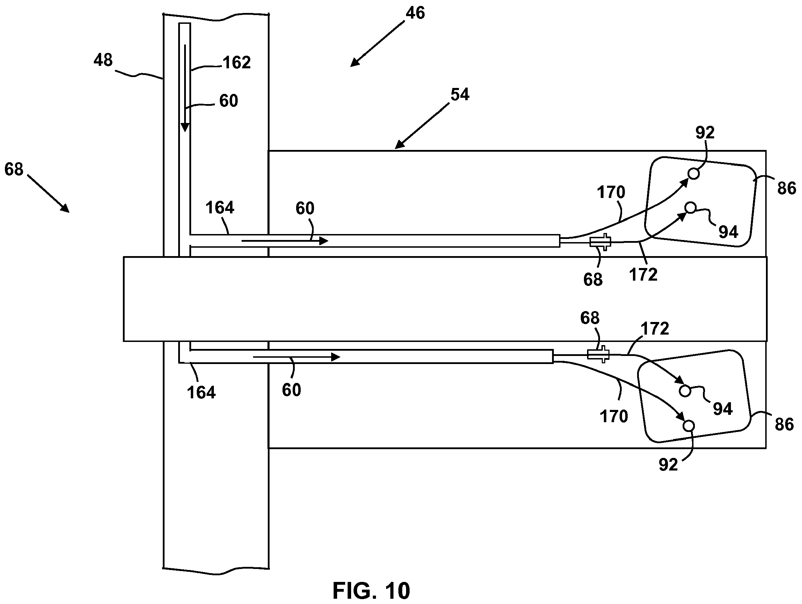

Another example of the use of an auto-thermal valve 68 for selectively providing fuel to the primary and secondary fuel delivery holes 92, 94 in the vanes 86 of a swirler assembly 80 in a fuel nozzle 54 is depicted in FIGS. 9 and 10. In this embodiment, the auto-thermal valve 68 is located within the body of the fuel nozzle 54, rather than in the end cover assembly 48. Compared to the embodiment depicted in FIGS. 7 and 8, this embodiment reduces the number of fuel passages/connections required in/through the end cover assembly 48. In practice, any number of auto-thermal valves 68 may be used to selectively provide fuel or any other fluid to one or more locations within the fuel nozzle 54 or other components of the combustor 10.

In FIGS. 9 and 10, the auto-thermal valve 68 is used to selectively provide fuel 170, 172 to the primary and secondary fuel delivery holes 92, 94 in the vanes 86 of the swirler assembly 80. For example, in FIG. 9, the auto-thermal valve 68 is in a closed state (i.e., the temperature of the fuel 60, provided via a fuel passage 162, is below the temperature set point of the auto-thermal valve 68), while in FIG. 10, the auto-thermal valve 68 is in an open state (i.e., the temperature of the fuel 60 is above the temperature set point of the auto-thermal valve 68).

In FIG. 9, fuel 60 is supplied to the fuel nozzle 54 through the fuel passage 162. The fuel 60 passes from the fuel passage 162 into the fuel nozzle 54 through a set of fuel passages 164. A first portion 170 of the fuel 60 is directed through the body of the fuel nozzle 54 to the primary fuel delivery holes 92 in the vanes 86 of the swirler assembly 80. The second portion 172 of the fuel 60, however, does not flow to the secondary fuel delivery holes 94 in the vanes 86 of the swirler assembly 80 because the auto-thermal valve 68 is in a closed state.

In FIG. 10, the auto-thermal valve 68 is in an open state (i.e., the temperature of the fuel 60 is above the temperature set point of the auto-thermal valve 68). In the open state, the first portion 170 of the fuel 60 is directed to the primary fuel delivery holes 92 in the vanes 86 of the swirler assembly 80, while the second portion 172 of the fuel 60 is directed to secondary fuel delivery holes 94 in the vanes 86 of the swirler assembly 80.

The auto-thermal valve 68 is sensitive to the temperature of the fuel 60, and is passively actuated. In other words, no control connections and no sensor signals are required. For example, the auto-thermal valve 68 may be passively actuated via the expansion of a temperature-sensitive fluid coupled to a movable piston.

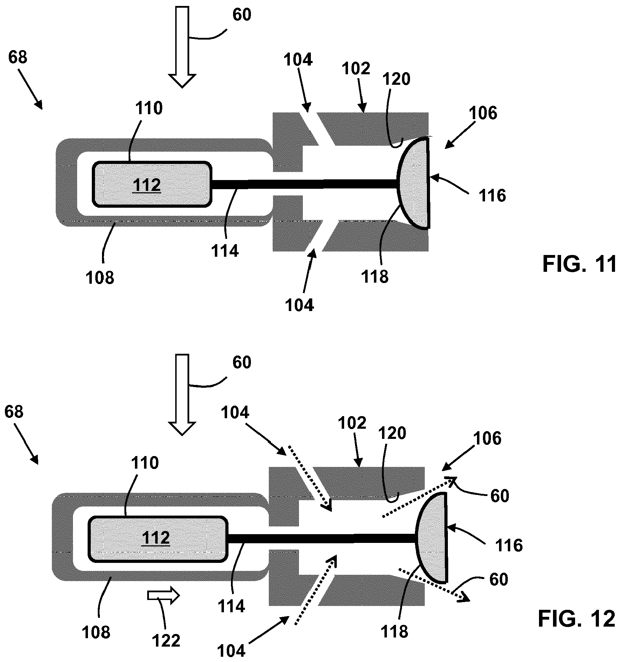

An auto-thermal valve 68 according to embodiments is depicted in FIGS. 11 and 12. Other suitable types of auto-thermal valves 68 can also be used. As shown, the auto-thermal valve 68 includes a valve section 102 including one or more fuel inlet ports 104 and a fuel outlet port 106. The auto-thermal valve 68 further includes a housing 108 enclosing a bellows or other expandable element 110 containing a thermally expandable material 112. The expandable element 110 is coupled to a rod 114. A valve disc 116 is coupled to a distal end of the rod 114. The thermally expandable material 112 may include, for example, a silicon heat transfer fluid, a thermal salt or oil, or any other suitable thermally expandable material capable of providing the functionality described herein.

The auto-thermal valve 68 is shown in a closed configuration in FIG. 11 (e.g., the temperature of the fuel 60 is below the temperature set point of the auto-thermal valve 68). In the closed configuration, a surface 118 of the valve disc 116 sealingly engages a complementary (e.g., conical) valve seat 120 formed adjacent the fuel outlet port 106. In general, the valve disc 116 and valve seat 120 may have any suitable configuration capable of forming a seal to prevent the flow of fuel 60 through the fluid outlet port 106. In the closed configuration, the flow of fuel 60 is prevented from flowing from the fuel inlet port(s) 104 through the fuel outlet port 106 into a downstream location.

Referring now to FIG. 12, an increase in the temperature of the fuel 60 above the temperature set point of the auto-thermal valve 68 heats up, and causes an expansion of, the thermally expandable material 112 within the expandable element 110. The enlargement of the expandable element 110 within the housing 108 (e.g., as indicated by arrow 122) forces the rod 114 and valve disc 116 away from the valve seat 120 and the fuel outlet port 106. When the surface 118 of the valve disc 116 no longer forms a seal against the valve seat 120, the fuel 60 is allowed to flow from the fuel inlet ports 104 through the gas flow outlet port 106 (as indicated by the dashed arrows) and into a downstream location.

The auto-thermal valve 68 may be configured as a binary valve, which is either closed or fully open. Alternatively, the auto-thermal valve 68 may be configured to open over a range of fuel temperatures. In this case, the auto-thermal valve 68 may begin to open at a first temperature and be fully open at a second, higher temperature.

Various thermally expandable materials 112 may be used in different auto-thermal valves 68 to provide different coefficients of thermal expansion. This provides, for example, different opening/closing temperature set points for different auto-thermal valves 68. Further, in general, any number of auto-thermal valves 68 may be used. In addition, although the auto-thermal valves 68 are shown as disposed in particular locations in the figures, these locations are for descriptive purposes only; other suitable locations may be available in a gas turbine system.

In other embodiments, a pressure-sensitive valve may be used in lieu of or in addition to one or more of the auto-thermal valves 68. In this case, when the fuel temperature is high enough to push the pressure drop across a fuel nozzle to a high enough level, the pressure-sensitive valve will open. Of course, actively controlled valves may also be used in lieu of or in addition to one or more of the auto-thermal valves 68.

Although described above in conjunction with a swirler assembly 80, it should be noted that the auto-thermal fuel nozzle flow modulation described herein may be used to selectively control the flow of fuel to, and/or control the pressure ration of, other types of fuel nozzles and fuel injection systems. For example, combustion systems that include a set of fuel injection "pegs" separate from a swirler assembly may be very sensitive to fuel pressure ratio. Further, combustion systems that do not include a fuel nozzle including a swirler assembly may also benefit from auto-thermal fuel nozzle flow modulation.

In various embodiments, components described as being "coupled" to one another can be joined along one or more interfaces. In some embodiments, these interfaces can include junctions between distinct components, and in other cases, these interfaces can include a solidly and/or integrally formed interconnection. That is, in some cases, components that are "coupled" to one another can be simultaneously formed to define a single continuous member. However, in other embodiments, these coupled components can be formed as separate members and be subsequently joined through known processes (e.g., fastening, ultrasonic welding, bonding).

When an element or layer is referred to as being "on", "engaged to", "connected to" or "coupled to" another element, it may be directly on, engaged, connected or coupled to the other element, or intervening elements may be present. In contrast, when an element is referred to as being "directly on," "directly engaged to", "directly connected to" or "directly coupled to" another element, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A combustor for a gas turbine, comprising:
   a fuel nozzle; and
   a passively-actuated valve for selectively directing a supply of fuel to at least one fuel passage in the fuel nozzle based on a characteristic of the fuel.
2. The combustor according to clause 1, wherein a location of the passively-actuated valve is at least one of:
   within an end cover assembly of the combustor, wherein the end cover assembly is coupled to the fuel nozzle; and
   within a body of the fuel nozzle.
3. The combustor according to any preceding clause, wherein the passively-actuated valve comprises a thermally-actuated valve, and wherein the characteristic of the fuel comprises a temperature of the fuel.
4. The combustor according to any preceding clause, wherein the thermally-actuated valve is in a first state when the temperature of the fuel is below a temperature set point, and wherein the thermally-actuated valve is in a second state when the temperature of the fuel is above the temperature set point.
5. The combustor according to any preceding clause, wherein in the first state the thermally-actuated valve is closed, and wherein in the second state the thermally-actuated valve is open.
6. The combustor according to any preceding clause, wherein the at least one fuel passage includes:
   a first set of fuel passages, wherein at least a portion of the fuel passes into the first set of fuel passages; and
   a second set of fuel passages, wherein the thermally-active valve selectively directs at least a portion of the fuel into the second set of fuel passages.
7. The combustor according to any preceding clause, wherein the first and second sets of fuel passages are fluidly coupled to a swirler assembly.
8. The combustor according to any preceding clause, wherein the first set of fuel passages are fluidly coupled to a first set of fuel delivery holes in a vane of the swirler assembly, and wherein the second set of fuel passages are fluidly coupled to a second set of fuel delivery holes in the vane of the swirler assembly.
9. The combustor according to any preceding clause, wherein the thermally-actuated valve is configured to prevent fuel from flowing through the second set of fuel passages to the second set of fuel delivery holes in the vane of the swirler assembly when the temperature of the fuel is below the temperature set point.
10. The combustor according to any preceding clause, wherein the thermally-actuated valve is configured to control a fuel pressure ratio across the first and second sets of fuel delivery holes in the vane of the swirler assembly.
11. A turbine system, comprising:
   a compressor;
   a combustor; and
   a turbine,
   the combustor comprising:
      a fuel nozzle; and
      a passively-actuated valve for selectively directing a supply of fuel to at least one fuel passage in the fuel nozzle based on a characteristic of the fuel.
12. The turbine system according to any preceding clause, wherein a location of the passively-actuated valve is at least one of:
   within an end cover assembly of the combustor, wherein the end cover assembly is coupled to the fuel nozzle; and
   within a body of the fuel nozzle.
13. The turbine system according to any preceding clause, wherein the passively-actuated valve comprises a thermally-actuated valve and the characteristic of the fuel comprises a temperature of the fuel, wherein the thermally-actuated valve is in a first state when the temperature of the fuel is below a temperature set point, and wherein the thermally-actuated valve is in a second state when the temperature of the fuel is above the temperature set point.
14. The turbine system according to any preceding clause, wherein in the first state the thermally-actuated valve is closed, and wherein in the second state the thermally-actuated valve is open.
15. The turbine system according to any preceding clause, wherein the at least one fuel passage includes:
   a first set of fuel passages, wherein at least a portion of the fuel passes into the first set of fuel passages; and
   a second set of fuel passages, wherein the thermally-active valve selectively directs at least a portion of the fuel into the second set of fuel passages.
16. The turbine system according to any preceding clause, wherein the first and second sets of fuel passages are fluidly coupled to a swirler assembly, wherein the first set of fuel passages are fluidly coupled to a first set of fuel delivery holes in a vane of the swirler assembly, and wherein the second set of fuel passages are fluidly coupled to a second set of fuel delivery holes in the vane of the swirler assembly.
17. The turbine system according to any preceding clause, wherein the thermally-actuated valve is configured to prevent fuel from flowing through the second set of fuel passages to the second set of fuel delivery holes in the vane of the swirler assembly when the temperature of the fuel is below the temperature set point.
18. The turbine system according to any preceding clause, wherein the thermally-actuated valve is configured to control a fuel pressure ratio across the first and second sets of fuel delivery holes in the vane of the swirler assembly.
19. A method, comprising:
   controlling a temperature of fuel in a combustor of a gas turbine; and
   selectively actuating a thermally-actuated valve in the combustor based on the temperature of the fuel to control a fuel pressure ratio across fuel delivery holes in a fuel nozzle of the combustor.

## Claims

1. A combustor (10) for a gas turbine (20), comprising:
a fuel nozzle (54); and
a passively-actuated valve (68) for selectively directing a supply of fuel (60) to at least one fuel passage (64, 66) in the fuel nozzle (54) based on a characteristic of the fuel (60).

2. The combustor (10) according to claim 1, wherein a location of the passively-actuated valve (68) is at least one of:
within an end cover assembly (48) of the combustor (10), wherein the end cover assembly (48) is coupled to the fuel nozzle (54); and
within a body of the fuel nozzle (54).

3. The combustor (10) according to claim 1 or 2, wherein the passively-actuated valve (68) comprises a thermally-actuated valve (68), and wherein the characteristic of the fuel (60) comprises a temperature of the fuel (60).

4. The combustor (10) according to claim 3, wherein the thermally-actuated valve (68) is in a first state when the temperature of the fuel (60) is below a temperature set point, and wherein the thermally-actuated valve (68) is in a second state when the temperature of the fuel (60) is above the temperature set point.

5. The combustor (10) according to claim 4, wherein in the first state the thermally-actuated valve (68) is closed, and wherein in the second state the thermally-actuated valve (68) is open.

6. The combustor (10) according to claim 4 or claim 5, wherein the at least one fuel passage includes:
a first set of fuel passages (64), wherein at least a portion of the fuel (60) passes into the first set of fuel passages (64); and
a second set of fuel passages (66), wherein the thermally-active valve (68) selectively directs at least a portion of the fuel (60) into the second set of fuel passages (66).

7. The combustor (10) according to claim 6, wherein the first and second sets of fuel passages (64, 66) are fluidly coupled to a swirler assembly (80).

8. The combustor (10) according to claim 7, wherein the first set of fuel passages (64) are fluidly coupled to a first set of fuel delivery holes (92) in a vane (86) of the swirler assembly (80), and wherein the second set of fuel passages (66) are fluidly coupled to a second set of fuel delivery holes (94) in the vane (86) of the swirler assembly (80).

9. The combustor (10) according to claim 8, wherein the thermally-actuated valve (68) is configured to prevent fuel (60) from flowing through the second set of passages (66) to the second set of delivery holes (94) in the vane (86) of the swirler assembly (80) when the temperature of the fuel (60) is below the temperature set point.

10. The combustor (10) according to claim 8, wherein the thermally-actuated valve (68) is configured to control a fuel pressure ratio across the first and second sets of fuel delivery holes (92, 94) in the vane (86) of the swirler assembly (80).
